Europäisches Patentamt

European Patent Office

Office européen des brevets

(11) Veröffentlichungsnummer: **0 254 922 B1**

(19)

(12) **EUROPÄISCHE PATENTSCHRIFT**

(45) Veröffentlichungstag der Patentschrift: **02.01.92**

(21) Anmeldenummer: **87109827.3**

(22) Anmeldetag: **08.07.87**

(51) Int. Cl.5: **E06B 9/56**, B60J 5/08

(54) Rolladen, insbesondere für Öffnungen an Fahrzeugen wie Brandschutzfahrzeugen.

(30) Priorität: **30.07.86 DE 3625850**

(43) Veröffentlichungstag der Anmeldung:
**03.02.88 Patentblatt 88/05**

(45) Bekanntmachung des Hinweises auf die
Patenterteilung:
**02.01.92 Patentblatt 92/01**

(84) Benannte Vertragsstaaten:
**AT DE FR GB NL**

(56) Entgegenhaltungen:
**DE-A- 2 804 857**
**DE-A- 3 443 470**
**DE-U- 1 979 843**
**DE-U- 7 319 001**

(73) Patentinhaber: **Iveco Magirus Aktiengesellschaft**
**Schillerstrasse 2 Postfach 27 40**
**W-7900 Ulm/Donau(DE)**

(72) Erfinder: **Arlt, Andreas, Dipl.-Ing. (FH)**
**Hans-Acker-Weg 1**
**W-7900 Ulm(DE)**
Erfinder: **Seidel, Wolfgang Dipl.-Ing. (FH)**
**Eberhart-Strasse 44**
**W-7900 Ulm(DE)**
Erfinder: **Kreutner, Hans**
**Fuchsweg 11**
**W-7910 Ludwigsfeld(DE)**

(74) Vertreter: **Socha, Peter**
**Iveco Magirus AG Postfach 2740 Schillerstrasse 2**
**W-7900 Ulm(DE)**

**Beschreibung**

Die Erfindung betrifft einen Rolladen für Öffnungen an Feuerwehrfahrzeugen mit in seitlichen Führungsschienen geführten Rolladenpaneelen, die durch in den Führungsschienen aufgenommene Abdichtungsleisten abgedichtet sind, wobei die im Querschnitt im wesentlichen U-förmig ausgebildeten Führungsschienen an den Außenseiten des oder der U-Schenkel zumindest eine Profilaussparung zur verschieblichen, arretierbaren Aufnahme weiterer Elemente aufweist.

Rolläden zum Verschließen von stationären oder instationären Öffnungen, beispielsweise Öffnungen an Fahrzeugen wie Sicherheits- und Brandbekämpfungsfahrzeuge sind bekannt, wobei im allgemeinen verhakte Stäbe oder Leisten oder gelenkig verbundene Profile Verwendung finden. Die einzelnen Paneele der Rolläden sind in seitlichen Führungsschienen geführt und durch seitliche Abdichtleisten abgedichtet. Die Paneele laufen mittels Gleitsteinen in den Führungsschienen und können in der Offenstellung auf einer Walze aufgewickelt werden oder in abgewinkelter Lage in verlängerten Führungsschienen beispielsweise an der Decke eines Fahrzeugs aufbewahrt werden. Offenstellung und Verschlußstellung sowie gegebenenfalls eine oder mehrere Zwischenstellungen können durch einen Rolladenschalter eingestellt werden. Hierbei dient der Rolladenschalter entweder als mechanischer Anschlag oder aber als optischer, magnetischer oder elektrischer Anschlag. Um eine ausreichende Stabilität eines Rolladens einzurichten, werden die Führungsschienen vielfach im Querschnitt aufwendig konfiguriert, beispielsweise als geschlossener Viereckrahmen ausgelegt (vgl. DE-A-28.04.857). Betätigungsschalter werden an geeigneter Stelle über Konsolen angebracht und räumlich vergleichsweise kompliziert eingestellt, um eine entsprechende Rolladenstellung zu realisieren. Neben Abdichtleisten sind auch nach dem Stand der Technik vielfach sogenannte Abdeckköder vorhanden, die auf den Führungsschienen bleibend beispielsweise durch Verklebung befestigt sind und für ein verbessertes optisches Erscheinungsbild sorgen. Die Anbringung von Abdeckködern und Abdichtleisten an den Führungsschienen ist ebenso wie die Rolladenschalter-Befestigung vergleichsweise kompliziert.

Aus DE-U-1.979.843 ist eine mehrteilige Führungsschiene für Rolläden oder dergl. bekannt, bei welcher Zusatzwinkel befestigt werden können, die die Führungsschiene an einer Wand oder dergl. haltern. Die Zusatzwinkel stellen eine Montagehilfe dar und sind selbst aktive Halteteile der Schienen, welche eine geringe Flexibilität besitzen, da ein genau beschriebenes Leistenprofil verwendet werden muß. Das genau vorgeschriebene Leistenprofil geht mit erhöhten Werkzeugkosten einher, wenn auf ein neues Leistenprofil übergegangen werden muß.

Aufgabe der Erfindung ist die Schaffung eines Rolladens der eingangs genannten Art, der bei sehr einfachem, leichtgewichtigen und dennoch stabilen Aufbau sowie zuverlässigem Betrieb für Zusatzfunktionen geeignet ist und gleichwohl sich durch eine vereinfachte lösbare Montage der Gesamtanordnung auszeichnet.

Gelöst wird die der Erfindung zugrundeliegende Aufgabe dadurch, daß die weiteren Elemente ein oder mehrere Rolladenschalter sind.

Im Innenraum des "U" sind endseitig die einzelnen Paneele des Rolladens aufgenommen und über Gleitsteine geführt. Der U-förmige Querschnitt sorgt auf der einen Seite für ein leichtgewichtiges Bauteil, auf der anderen Seite für eine ausreichende Biegestabilität, insbesondere durch die erfindungsgemäßen Längsaussparungen. Das Querschnittsprofil läßt sich gleichwohl einfach beispielsweise aus einer gezogenen Metallegierung herstellen.

Zwar kennt man gemäß De-A-34.43.470 Rolläden, welche grundsätzlich für Feuerwehrfahrzeuge geeignet sind. Die verschieblich arretierbar aufgenommenen weiteren Elemente sind jedoch vornehmlich Zusatzleisten, welche mit den seitlichen Führungsschienen derart zusammenwirken, daß insgesamt breitere Führungsschienen entstehen, um Spalten in der Gesamtkonstruktion zu überbrücken.

Mit Vorzug sind zwei parallele benachbarte Führungsprofil-Aussparungen für den Rolladenschalter vorgesehen, wobei die beiden Aussparungen insbesondere als T-Nuten ausgebildet sind, aber auch nach Art einer Schwalbenschwanzführung ausgebildet sein können. Dadurch läßt sich ein Rolladenschalter an gezielter Stelle auf einfache Weise montieren und einstellen, insbesondere durch Längsverschiebung in den Führungsprofil-Aussparungen und anschließender Abdichtleiste nicht nur Dicht-, sondern auch Gleitfunktion. Eine zusätzliche lösbare Befestigung an der vorgenannten Abdichtleiste wird bevorzugt durch eine entsprechend ausgebildete Längsaussparung an der Innenseite des vorgenannten U-Schenkels der Führungsschiene geschaffen, die die Biegestabilität der Führungsschiene weiter erhöht.

Die Erfindung wird nachfolgend anhand von Ausführungsbeispielen unter Bezugnahme auf die beigefügte Zeichnung näher erläutert; es zeigen:

Fig. 1 einen Querschnitt einer U-förmigen Führungsschiene mit basisseitiger lösbarer Befestigung einer Abdeckköderleiste aus elastomerem Material sowie schenkelinnenseitiger Aufnahme einer (strichpunktiert gezeichneten) Abdichtleiste mit Gleitfunktion für den (nicht veranschaulichten) Rolladenpanzer,

Fig. 2 ein anderes Querschnittsprofil einer Führungsschiene mit aufgenommener Abdeckköder- und Abdichtleiste in einer integrierten Anordnung,

Fig. 3 eine Führungsschiene gemäß Fig. 1 ohne Abdeckköderleiste, jedoch mit aufgenommenem Rolladenschalter in einer perspektivischen Vertikalteilansicht, und

Fig. 4 eine schematische Querschnittsansicht der Anordnung der Fig. 3 mit Draufsicht auf den montierten Rolladenschalter.

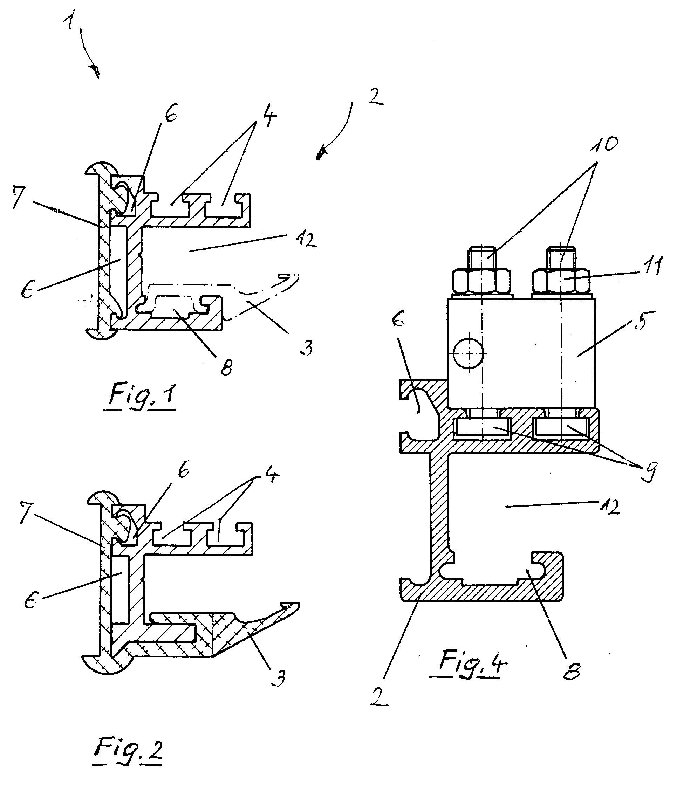

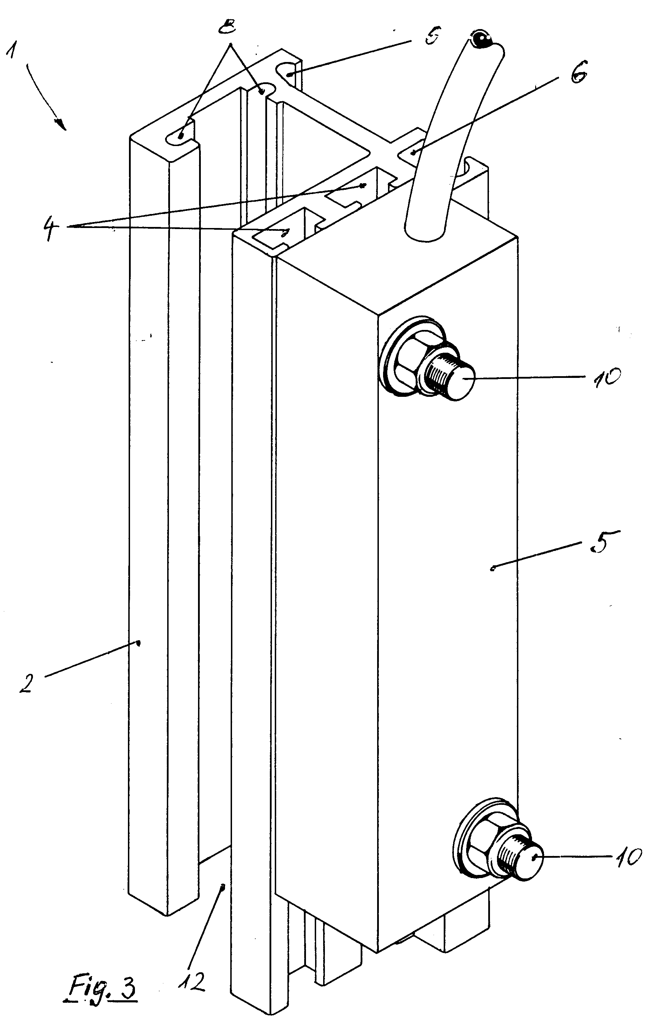

In den Fig. 1, 3 und 4 ist eine seitliche, vertikale Führungsschiene (2) eines Rolladens (1) eines Fahrzeugs, insbesondere Brandschutzfahrzeugs mit Wagenkastenprofil, gezeigt, die im Querschnitt im wesentlichen U-förmig ausgebildet ist. Im inneren Aufnahmeraum (12) des "U" ist das eine seitliche Ende des Rolladenpanzers bzw. der Paneele des Rolladens aufgenommen (nicht veranschaulicht).

Die Führungsschiene ist ein stranggepreßtes Kunststoffteil mit einem Spezialprofil gemäß Zeichnung. Insbesondere sind an der Außenseite des einen U-Schenkels der Führungsschiene (2) zwei dicht benachbarte parallele Führungsprofil-Aussparungen (4) in Form von T-Nuten vorgesehen, in welchen ein Rolladenschalter (5) bei geringem Befestigungsaufwand in eingestellter Weise befestigt ist. Insbesondere sind zwei endseitige, zueinander versetzte genormte Sechskantschrauben durch den Körper des Rolladenschalters (5) vorgesehen, deren Köpfe (9) nicht verdrehbar, jedoch grundsätzlich verschieblich in den T-Nuten geführt sind. Nach entsprechender Längseinstellung des Rolladenschalters (5) werden die Gegenmuttern (11) der Sechskantschrauben (10) angezogen. Auf diese Weiserichtet der Rolladenschalter über einen inneren Magneten eine Magnetschranke an entsprechender Stelle der Führungsschiene (2) ein, so daß ein in der Führungsschiene (2) laufender Rolladenpanzer die Magnetschranke durchläuft und den Rolladenschalter und mithin den Rolladen insgesamt in dieser Stellung schaltet, insbesondere anhält.

Ersichtlich wird mithin ein vergleichsweise biegesteifes leichtgewichtiges Führungsschienenteil geschaffen, das gleichzeitig zur Befestigung des Rolladenschalters an geeigneter Längserstreckung der Führungsschiene (2) dient.

Die Führungsschiene (2) gemäß den Fig. 1, 3 und 4 weist ferner an der Basis des "U" zwei weitere Längsaussparungen (6) zur lösbaren Befestigung einer Abdeckköderleiste (7) auf, die in Fig. 1 gezeigt ist und das Erscheinungsbild der Gesamtanordnung verbessert sowie die Abdichtungsfunktion zwischen der Führungsschiene (2) und dem (nicht veranschaulichten) Wagenkastengerippe übernimmt. Durch die letztgenannten Längsaussparungen (6) wird die Biegesteifigkeit der Führungsschiene (2) weiter erhöht.

Das vorgenannte Ausführungsbeispiel umfaßt ferner an der Innenseite desjenigen U-Schenkels der Führungsschiene (2), welcher die T-Nuten nicht enthält, eine weitere Längsaussparung (8) zur lösbaren Aufnahme einer Abdichtleiste (3), die in Fig. 1 strichpunktiert dargestellt ist. Auch diese Aussparung (8) verbessert die Querstabilität der Führungsschiene (2). Die Abdichtleiste (3) dichtet an ihrer (in Fig. 1 rechten) Dichtlippe gegenüber dem Rolladenpanzer bzw. den Rolladen-Paneelen ab und übernimmt an ihrer seitlichen Längsbasis Gleit-Führungsfunktion gegenüber dem Panzer bzw. Paneel.

Das Ausführungsbeispiel gemäß Fig. 2 der Zeichnung unterscheidet sich gegenüber dem vorgenannten Beispiel durch eine integriert ausgebildete Abdeckköder-/Abdichtleiste, welche über den (glatten) U-Schenkel der Führungsschiene (2) gezogen ist, welcher die beiden T-Nuten nicht enthält. Die Abdichtleiste (3) besteht hierbei aus einem weichen, die Abdeck-Köderleiste aus einem vergleichsweise harten elastomeren Material. Beide vorgenannten Einzelteile sind an ihrer Basis stumpf miteinander verklebt.

**Patentansprüche**

1. Rolladen (1) an Feuerwehrfahrzeugen mit in seitlichen Führungsschienen (2) geführten Rolladenpaneelen, die durch in den Führungsschienen (2) aufgenommene Abdichtungsleisten (3) abgedichtet sind, wobei die im Querschnitt im wesentlichen U-förmig ausgebildeten Führungsschienen (2) an den Außenseiten des oder der U-Schenkel zumindest eine Profilaussparung (4) zur verschieblichen, arretierbaren Aufnahme weiterer Elemente (5) aufweist, dadurch gekennzeichnet, daß die weiteren Elemente ein oder mehrere Rolladenschalter sind.

2. Rolladen nach Anspruchs 1, dadurch gekennzeichnet, daß zwei parallele benachbarte Führungsprofil-Aussparungen (4) für den Rolladenschalter (5) vorgesehen sind.

3. Rolladen nach Anspruch 1 oder 2, dadurch gekennzeichnet, daß die Führungsprofil-Aussparungen (4) T-Nuten sind.

4. Rolladen nach Anspruch 3, dadurch gekennzeichnet, daß in den T-Nuten die Köpfe (9) von Sechs- oder Vierkantschrauben (10) aufgenommen sind, die durch den Rolladenschalter (5) verlaufen und durch angezogene Gegenmuttern (11) den Rolladenschalter (5) arretiert befestigen.

5. Rolladen nach Anspruch 1 oder 2, dadurch gekennzeichnet, daß die Führungsprofil-Aussparungen Schwalbenschwanzführungen sind.

6. Rolladen nach einem der Ansprüche 1 bis 5, dadurch gekennzeichnet, daß an der Außenseite der U-Basis zumindest eine Längsaussparung (6) zur Aufnahme eine Abdeckköderleiste (7) vorgesehen ist.

7. Rolladen nach Anspruch 6, dadurch gekennzeichnet, daß die Abdeckköderleiste (7) einstückig bzw. integriert mit der Abdichtleiste (3) für die Rolladen-Paneele ausgebildet ist.

8. Rolladen nach einem der Ansprüche 1 bis 7, dadurch gekennzeichnet, daß an der Innenseite des U-Schenkels, der nicht die Führungsprofil-Aussparungen (4) enthält, eine zusätzliche Längsaussparung (8) zur Aufnahme der Abdichtleiste (3) für die Rolladen-Paneele vorgesehen ist.

9. Rolladen nach Anspruch 7 oder 8, dadurch gekennzeichnet, daß die Abdichtleiste (3) aus einem weichen und die Abdeckköderleiste (7) aus einem harten elastomeren Material gebildet sind.

## Claims

1. A roller shutter (1) on fire-service vehicles with roller shutter panels guided in lateral guide rails (2), which panels are sealed off by sealing strips (3) accommodated in the guide rails (2), the guide rails (2) of substantially U-shaped cross-section having on the outsides of the U-leg or U-legs at least one profiled recess (4) for the displaceable, arrestable reception of further elements (5), characterised in that the further elements are one or more roller shutter switches.

2. A roller shutter according to Claim 1, characterised in that two parallel adjacent guide recesses (4) are provided for the roller shutter switch (5).

3. A roller shutter according to Claim 1 or 2, characterised in that the guide profile recesses (4) are T-grooves.

4. A roller shutter according to Claim 3, characterised in that in the T-grooves the heads (9) of hexagonal or square screws (10) are received which extend through the roller shutter switch (5) and secure the roller shutter switch (5) arrested by tightened locking nuts (11).

5. A roller shutter according to Claim 1 or 2, characterised in that the guide profiled recesses are dovetail guides.

6. A roller shutter according to any one of Claims 1 to 5, characterised in that on the outside of the U-base there is provided at least one longitudinal recess (6) for the reception of a disguising cover strip (7).

7. A roller shutter according to Claim 6, characterised in that the disguising cover strip (7) is made in one piece and/or integrated with the seal strip (3) for the roller shutter panels.

8. A roller shutter according to any one of Claims 1 to 7, characterised in that on the inner side of the U-leg which does not contain the guide profiled recesses (4) there is provided an additional longitudinal recess (8) for the reception of the seal strip (3) for the roller shutter panels.

9. A roller shutter according to Claim 7 or 8, characterised in that the seal strip (3) is formed from a soft elastomer material and the disguising cover strip (7) is formed from a hard elastomer material.

## Revendications

1. Volet à rouleau (1) pour véhicules de lutte contre l'incendie avec des panneaux de volet à rouleau guidés dans des rails de guidage latéraux, panneaux qui sont rendus étanches par des bandeaux d'étanchéité (3) logés dans le rail de guidage (2), le rail de guidage (2) qui en coupe a sensiblement la forme d'un U étant pourvu sur les côtés extérieurs de la branche de l'U ou des branches de l'U d'au moins un évidement profilé (4) pour recevoir d'autres éléments (5) translatifs et pouvant être bloqués, volet à rouleau caractérisé en ce que les autres éléments sont un ou plusieurs commutateurs de volets à rouleau.

2. Volet à rouleau selon la revendication 1, caractérisé en ce qu'il est prévu deux éléments profilés de guidage voisins parallèles (4) pour le commutateur (5) de volet à rouleau.

3. Volet à rouleau selon la revendication 1 ou 2, caractérisé en ce que les évidements profilés de guidage (4) sont des rainures en forme de T.

4. Volet à rouleau selon la revendication 3, caractérisé en ce que dans les rainures en T sont logées les têtes (9) de boulons à six ou quatre pans (10), qui passent à travers le commutateur de volet à rouleau (5) et bloquent le commutateur de volet à rouleau (5) à l'aide des contre-écrous (11) serrés.

5. Volet à rouleau selon la revendication 1 ou 2, caractérisé en ce que les évidements profilés de guidage sont des guides en queue d'aronde.

6. Volet à rouleau selon l'une des revendications 1 à 5, caractérisé en ce que sur le côté extérieur de la base de l'U est pourvu d'au moins un évidement longitudinal (6) pour recevoir un bandeau (7) à bourrelet de recouvrement.

7. Volet à rouleau selon la revendication 6, caractérisé en ce que le bandeau de bourrelet de recouvrement (7) est formé d'une seule pièce ou intégré au bandeau d'étanchéité (3) pour les panneaux de volet à rouleau.

8. Volet à rouleau selon l'une des revendications 1 à 7, caractérisé en ce que sur le côté intérieur de la branche de l'U, qui ne contient pas les évidements profilés de guidage (4) il est prévu un évidement longitudinal (8) additionnel pour recevoir le bandeau d'étanchéité (3) pour les panneaux de volet à rouleau.

9. Volet à rouleau selon la revendication 7 ou 8, caractérisé en ce que le bandeau d'étanchéité (3) est formé en une matière molle et le bandeau à bourrelet de recouvrement (7) en un matière élastomère dure.

Fig. 1

Fig. 2

Fig. 4

Fig. 3